# DEMANDE DE BREVET EUROPEEN

(11) **EP 4 822 120 A1**
(43) Date de publication de la demande: **14.10.2026**
(21) Numéro de dépôt: 26170779.8
(22) Date de dépôt: 03.04.2026
(51) Int. Cl.: E04H 1/12, A01M 31/02, A63H 33/00, E04B 1/34, E04H 3/24

(54) **PLATEFORME SUPPORTÉE PAR UN ARBRE, DISPOSITIF ET PROCÉDÉ DE MONTAGE**

(30) Priorité: 07.04.2025 FR 2503637
(71) Demandeur: Proludic, 37210 Vouvray (FR)
(72) Inventeur: LE POUPON, Denis, 37210 VOUVRAY (FR)
(74) Mandataire: Cabinet Netter

(57) **Abrégé**

Plateforme 1 supportée par un arbre, comprenant une lumière centrale 2 et une surface supérieure 5 plane en bois formant plancher pour un utilisateur se déplaçant dessus autour de la lumière centrale 2, caractérisée en ce qu'elle comprend trois sous-ensembles 6 identiques et complémentaires, chacune comprenant une région inférieure 7 occupant un premier secteur angulaire d'environ 120° autour de la lumière centrale 2 et une région supérieure 8 occupant un deuxième secteur angulaire, le deuxième secteur angulaire étant décalé par rapport au premier secteur angulaire, et chacune comprenant un premier bord et un deuxième bord opposés et complémentaires de manière que le premier bord d'un desdits sous-ensembles 6 et le deuxième bord d'un sous-ensemble voisin soient en complémentarité de formes.

## Description

L'invention concerne des installations de loisirs supportées par un arbre.

De telles installations de loisirs peuvent comprendre des installations effectuées en sur-mesure adapté à chaque arbre, par exemple des cabanes pour des séjours hôteliers, ou des installations ludiques destinées à des jeux ou à des passages brefs.

Par ailleurs, les installations de loisirs peuvent être entièrement supportées par l'arbre ou reposer partiellement ou en totalité par des poteaux scellés dans le sol lesquels sont néfastes aux racines de arbres.

L'invention vient améliorer les installations ludiques supportées par un arbre en préservant mieux l'arbre. Une telle installation ludique comprend une plateforme. La plateforme est en général construite sur mesure pour s'adapter à la dimension de l'arbre. Ceci génère un travail important sur place.

La demanderesse a cherché à augmenter la part de travail en atelier, automatisable ou au moins mécanisable, et à réduire la quantité de travail sur chantier soumis aux aléas climatiques.

L'invention vient améliorer la situation. À cet effet, elle propose une plateforme supportée par un arbre, comprenant une lumière centrale et une surface supérieure plane en bois formant plancher pour un utilisateur se déplaçant dessus autour de la lumière centrale. La plateforme comprend trois sous-ensembles identiques et complémentaires, chacune comprenant une région inférieure occupant un premier secteur angulaire d'environ 120° autour de la lumière centrale et une région supérieure occupant un deuxième secteur angulaire, le deuxième secteur angulaire étant décalé par rapport au premier secteur angulaire, et chacune comprenant un premier bord et un deuxième bord opposés et complémentaires de manière que le premier bord d'un desdits sous-ensembles et le deuxième bord d'un sous-ensemble voisin soient en complémentarité de formes.

Ce dispositif est particulièrement avantageux car il permet de réaliser une plateforme présentant une bonne rigidité, composé de sous-ensembles identiques, en général au nombre de deux, trois, quatre, cinq ou six, d'assemblage aisé et dont l'adaptation à l'arbre peut être effectuée par une simple découpe à la scie sauteuse.

Dans un mode réalisation, la région inférieure et la région supérieure sont réalisées en bois. La plateforme est légère.

Dans un mode réalisation, le premier bord est en forme de ligne brisée. La rigidité est accrue.

Dans un mode réalisation, La plateforme comprend une longrine périphérique. La plateforme est robuste.

Dans un mode réalisation, un dispositif comprend une plateforme comme décrit et une ceinture de support. La ceinture comprend une pluralité de cales en bois présentant une surface d'appui sur un arbre et une surface de pivot opposée à ladite surface d'appui, au moins une élingue de serrage des cales autour dudit arbre, une pluralité de bâtis montés à pivotement chacun dans une desdites surfaces de pivot, chaque bâti comprenant un fût disposé dans ladite surface de pivot, et deux branches symétriques dirigées à l'opposé des cales et orientées d'un angle de PI/2n par rapport au fût et un organe de serrage entre une branche d'un bâti et une branche parallèle d'un bâti voisin, avec n un entier. L'accrochage sur l'arbre est doux et les efforts sont répartis sur une hauteur importante. L'élingue est à distance de l'arbre. Le réglage de l'horizontalité de la plateforme est aisée. L'élingue permet d'éviter un ancrage au sol. La structure du sol est préservée et les racines de l'arbre sont épargnées.

Dans un mode réalisation, chaque cale présente une forme générale de parallélépipède rectangle avec ladite surface d'appui et une surface opposée parallèles reliées par des surfaces latérales, ladite surface de pivot étant ménagée à partir de la surface opposée et interférant avec les surfaces latérales. La fabrication de la cale est aisée.

Dans un mode réalisation, le dispositif comprend au moins une jambe de force supportée par une desdites cales en partie inférieure de ladite cale par une liaison pivot tandis que ladite surface de pivot est prévue dans une partie supérieure de ladite cale, ladite jambe de force supportant la plateforme ou le bâti à distance de la lumière centrale. Un poids élevé peut être supporté y compris sur les bords de la plateforme.

Dans un mode réalisation, l'élingue comprend une première extrémité fixée à une desdites cales par interférence et une deuxième extrémité fixée à ladite cale avec mise en tension par vis. Le serrage de l'élingue peut être adapté finement.

Dans un mode réalisation, le fût du bâti comprend une portion de tube monté pivotant dans ladite surface de pivot et un corps parallèle à la portion de tube et supportant les branches symétriques, un trou traversant chaque branche pour loger un desdits organes de serrage, le bâti étant mécanosoudé, le corps étant droit ou incurvé et chaque branche étant droite ou incurvé à l'opposé de la lumière centrale. Le réglage de l'horizontalité de la plateforme est aisé.

En variante, le tube fait partie du corps.

Dans un mode réalisation, le fût du bâti comprend une surface arrondie montée pivotante dans ladite surface de pivot et un corps supportant les branches symétriques, un trou traversant chaque branche pour loger un desdits organes de serrage, le bâti étant en bois.

Dans un mode réalisation, le dispositif comprend une pluralité de parois périphériques fixées à la plateforme à distance d'un axe de symétrie de la lumière centrale, chacune comprenant une partie inférieure munie d'au moins un poteau et une partie supérieure formant un angle d'au moins 90° par rapport à la partie inférieure et présentant une extrémité supérieure. Lesdites extrémités supérieures sont fixées mutuellement. Une cabane ludique peut être formée.

Dans un mode réalisation, la partie inférieure s'éloigne dudit axe en se rapprochant de la partie supérieure pour former un évasement, la partie inférieure comprenant deux poteaux parallèles et un panneau voisin de la partie supérieure, et la partie supérieure forme un toit pour le dispositif, ledit angle étant compris entre 100 et 150°, la partie supérieure étant un panneau plein. La structure des parois latérales est légère.

Dans un mode réalisation, un procédé de montage d'un dispositif à plateforme et ceinture de support comprend les étapes de :
a) fabriquer des sous-ensembles de plateforme,
b) disposer les sous-ensembles de plateforme autour d'un arbre, et
c) fixer ensemble les sous-ensembles de plateforme pour former une plateforme. Le montage est rapide et aisé avec un outillage réduit.

Dans un mode réalisation, le procédé comprend les étapes de :
d) Positionnement des cales autour et contre un arbre,
e) Positionnement et serrage de l'élingue appliquant les cales contre l'arbre,
f) Positionnement-des bâtis en contact avec les surfaces de pivot des cales,
g) Montage des organes de serrage,
h) Montage des jambes de force,
i) Serrage des organes de serrage,
j) Fixation des cales à l'arbre, puis procéder aux étapes b) et c) en posant les sous-ensembles de plateforme sur les bâtis. Les parois latérales sont robustes.

Dans un mode réalisation, le procédé comprend les étapes de :
k) Installation d'une ceinture supérieure autour de l'arbre,
l) Montage d'une pluralité de parois périphériques fixées à la plateforme à distance d'un axe de symétrie de la lumière centrale,
m) Fixation d'une extrémité supérieure des parois périphériques à la ceinture supérieure

D'autres caractéristiques et avantages de l'invention apparaîtront mieux à la lecture de la description qui suit, tirée d'exemples donnés à titre illustratif et non limitatif, tirés des dessins sur lesquels :
La Figure 1 est une vue de dessus d'une plateforme selon un aspect de l'invention.
La Figure 2 est une vue en perspective d'un sous-ensemble de plateforme selon un aspect de l'invention en cours d'assemblage.
La Figure 3 est une vue en perspective d'un sous-ensemble de plateforme selon un aspect de l'invention.
La Figure 4 est une vue en perspective d'une ceinture de support selon un aspect de l'invention.
La Figure 5 est une vue de dessus d'une ceinture de support selon un aspect de l'invention.
La Figure 6 est une vue en perspective d'un bâti selon un aspect de l'invention.
La Figure 7 est une vue de côté d'une cale selon un aspect de l'invention.

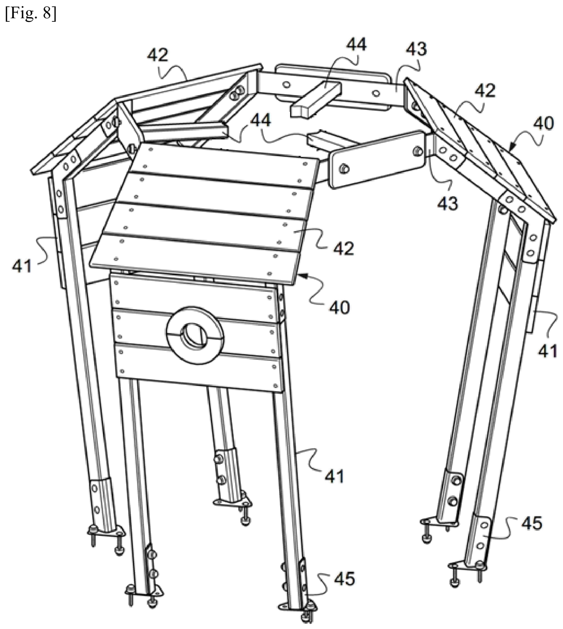

La Figure 8 est une vue en perspective d'une cabane selon un aspect de l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

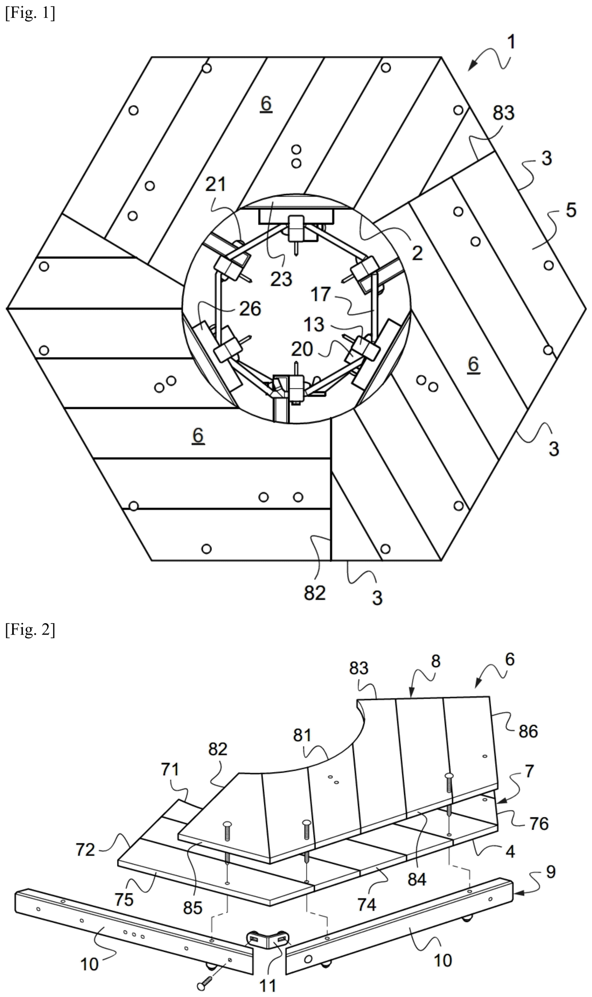

Une plateforme de jeu à installer autour d'un arbre est illustrée en figures 1 à 3. La plateforme 1 comprend une structure en bois et des connections et fixations métalliques. La plateforme 1 est hexagonale, dans le mode illustré. Les connections peuvent comprendre des pièces métalliques, notamment pattes, équerres, etc. réalisées en acier galvanisé ou en inox. La structure en bois est formée de planches, rainurées ou non sur chant, assemblées par clouage, vissage ou boulonnage.

La plateforme 1 présente une lumière centrale 2 prévue pour entourer un arbre. La lumière centrale 2 peut être agrandie selon le diamètre de l'arbre, soit au montage, soit à l'état monté pour s'adapter à la croissance de l'arbre. La lumière centrale 2 peut être agrandie au moyen d'une scie sauteuse.

La plateforme 1 présente une surface supérieure plane en bois. La surface supérieure peut être striée ou rainurée pour réduire les risques de glissement d'un utilisateur. La plateforme 1 forme un plancher pour un utilisateur se déplaçant dessus autour de la lumière centrale 2. La plateforme présente, en général, une surface inférieure 4 plane parallèle à la surface supérieure 5. La plateforme présente des bords extérieurs 3 en nombre supérieur à trois, par exemple six dans le mode de réalisation illustré. À l'état monté, les bords extérieurs 3 sont verticaux et les surfaces supérieure et inférieure sont horizontales aux imperfections de montage près.

La plateforme 1 comprend trois sous-ensembles 6 identiques. Les trois sous-ensembles 6 sont complémentaires de forme. Chaque sous-ensemble 6 comprend une région inférieure 7 et une région supérieure 8. La région inférieure 7 peut comprendre une épaisseur de planches et la région supérieure 8 peut comprendre une épaisseur de planches non parallèles aux planches de la région inférieure 7. Dans le mode de réalisation illustrée, les planches de la région inférieure 7 et les planches de la région supérieure 8 sont croisées selon un angle de 60°. Plus généralement, ledit angle peut être égal à 360°/nombre de côtés de la plateforme.

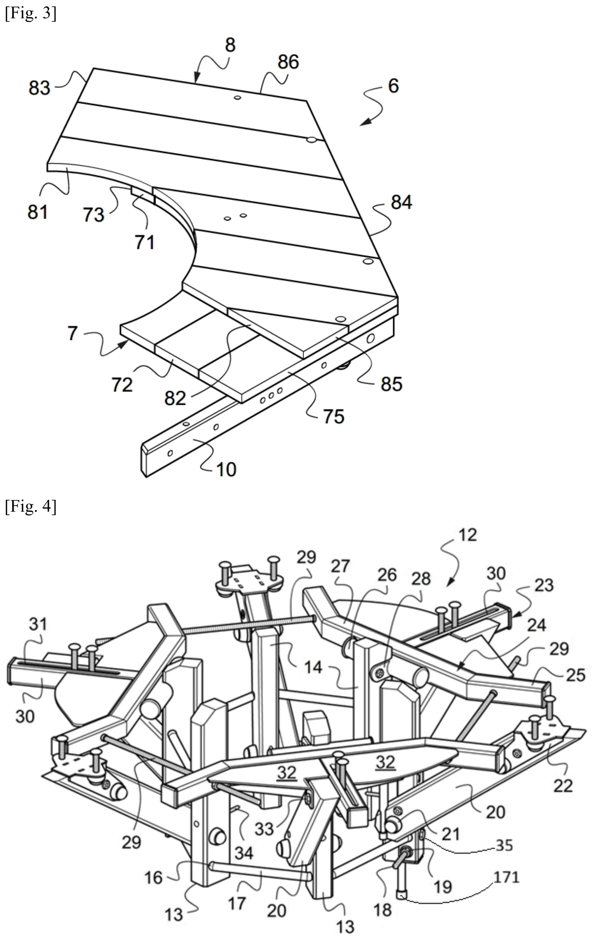

La région inférieure 7, illustrée sur les figures 2 et 3, présente cinq bords droits et un bord convexe 71. Le bord convexe 71 vient former la lumière centrale 2 de la plateforme. Le bord convexe 71 est un bord intérieur de la plateforme. Le bord convexe 71 est entouré par deux bords 72, 73 s'étendant entre la lumière centrale 2 et la périphérie de la plateforme 1. Lesdits deux bords 72, 73 s'étendent dans une direction radiale par rapport à la lumière centrale 2 ou dans une direction parallèle à une direction radiale. Dans ce qui suit, ils sont nommés bords radiaux 72, 73. Sur la périphérie de la plateforme, les deux bords radiaux 72, 73 sont reliés par trois bords extérieurs. Les bords extérieurs comprennent un grand bord 74 et deux petits bords 75, 76 disposés chacun d'un côté du grand bord. Chaque petit bord 75, 76 est disposé entre un bord radial 72, 73 et le grand bord 74. Dans le mode de réalisation représenté, les petits bords 75, 76 sont de longueur inégale. On peut prévoir un premier petit bord de longueur comprise entre 30 et 45 % de la longueur du grand bord et un deuxième petit bord de longueur comprise entre 70 et 55 % de la longueur du grand bord. Dans le mode de réalisation représenté, les planches sont orientées parallèlement à l'un des petits côtés. La région inférieure 7 occupe un premier secteur angulaire autour de la lumière centrale 2. Le premier secteur angulaire peut présenter un angle de 120°. Sur un cercle fictif ayant pour centre la lumière centrale 2, le premier secteur angulaire occupe environ un tiers du cercle.

La région supérieure 8, illustrée sur les figures 2 et 3, présente cinq bords droits et un bord convexe 81. Le bord convexe 81 vient former la lumière centrale 2 de la plateforme. Le bord convexe 81 est un bord intérieur de la plateforme. Le bord convexe 81 est entouré par un premier et un deuxième bords 82, 83 s'étendant entre la lumière centrale 2 et la périphérie de la plateforme. Lesdits premier et deuxième bords 82, 83 s'étendent dans une direction radiale par rapport à la lumière centrale 2 ou dans une direction parallèle à une direction radiale. Les premier et deuxième bords 82, 83 de la région supérieure 8 peuvent être parallèles aux bords radiaux 72, 73 de la région inférieure 7. En d'autres termes, les premier et deuxième bords 82, 83 de la région supérieure 8 et les premier et deuxième bords 72, 73 de la région inférieure 7 sont décalés. Le premier bord d'un desdits sous-ensembles 6 et le deuxième bord d'un sous-ensemble voisin sont en complémentarité de formes. On peut ainsi superposer et fixer ensemble la région supérieure 8 du premier sous-ensemble de la plateforme avec la région inférieure 7 du deuxième sous-ensemble de la plateforme d'un côté, et la région inférieure 7 du premier sous-ensemble de la plateforme avec la région supérieure 8 du troisième sous-ensemble de la plateforme. Sur la périphérie de la plateforme les premier et deuxième bords 82, 83 sont reliés par trois bords extérieurs.

Les bords extérieurs comprennent un grand bord 84 et deux petits bords 85, 86 disposés chacun d'un côté du grand bord 84. Chaque petit bord 85, 86 est disposé entre un bord radial 82, 83 et le grand bord 84. Dans le mode de réalisation représenté, les petits bords 85, 86 sont de longueur inégale. On peut prévoir un premier petit bord de longueur comprise entre 30 et 45 % de la longueur du grand bord 84 et un deuxième petit bord de longueur comprise entre 70 et 55 % de la longueur du grand bord 84.

Dans le mode de réalisation représenté, les planches sont orientées parallèlement à l'un des petits côtés. De préférence, la région supérieure 8 et la région inférieure 7 sont identiques. La région supérieure 8 occupe un deuxième secteur angulaire autour de la lumière centrale 2. Le deuxième secteur angulaire peut présenter un angle de 120°. Sur un cercle fictif ayant pour centre la lumière centrale 2, le deuxième secteur angulaire occupe environ un tiers du cercle._Le deuxième secteur angulaire est décalé par rapport au premier secteur angulaire pour permettre une superposition de la région supérieure 8 du deuxième sous-ensemble avec la région inférieure 7 du premier sous-ensemble, de la région supérieure 8 du troisième sous-ensemble avec la région inférieure 7 du deuxième sous-ensemble, et de la région supérieure 8 du première sous-ensemble avec la région inférieure 7 du troisième sous-ensemble.

Dans le mode de réalisation représenté, la zone de recouvrement entre deux sous-ensembles 6 de la plateforme est définie par deux segments de droites parallèles permettant de disposer d'une largeur constante pour la fixation mutuelle de la région inférieure 7 de l'un des sous-ensembles 6 avec la région supérieure 8 du sous-ensemble voisin. La fixation mutuelle peut être effectuée par vissage. Ainsi, les premier et deuxième bords 72, 73, 82, 83 sont alors parallèles à une direction radiale, par exemple un axe radial passant à équidistance entre les petits côtés.

En outre, une longrine 9 périphérique est installée sous les régions inférieures des trois sous-ensembles 6 de la plateforme. La longrine 9 comprend un profilé 10 ou traverse pour chaque côté de la plateforme. Chaque profilé 10 est fixé au corps de la plateforme par vissage ou boulonnage. Chaque sous-ensemble 6 de la plateforme comprend un premier profilé 10 correspondant au grand bord et un deuxième profilé 10 correspondant au petit bord de la région inférieure 7 en saillie par rapport à la région supérieure 8. Le premier profilé 10 et le deuxième profilé 10 sont fixés entre eux par une patte 11 pliée vissée ou boulonnée. Lesdits profilés 10 sont réalisés en bois. Lesdits profilés 10 présentent des extrémités jointives. En vue de dessus, les profilés 10 présentent une forme trapézoïdale. La surface supérieure desdits profilés 10 est en contact avec la surface inférieure des régions inférieures. La surface extérieure de la longrine 9 affleure les bords extérieurs des sous-ensembles 6.

L'assemblage d'une plateforme peut être effectué comme suit.

En atelier, le sous-ensemble 6 est formé. Les planches et les profilés sont approvisionnés. Les planches et les profilés sont sciés à dimension. Les planches sont juxtaposées pour former les six régions c'est-à-dire les trois régions supérieures et les trois régions inférieures. L'une des régions est retournée par rapport à l'autre pour former le décalage entre région supérieure 8 et région inférieure 7 du même sous-ensemble 6. La région supérieure 8 et la région inférieure 7 sont fixées ensemble. Le premier et le deuxième profilés 10 sont fixés ensemble et fixés à la région supérieure 8 et à la région inférieure 7. On obtient alors un sous-ensemble 6 de plateforme telle qu'illustré sur la figure 2. Le deuxième profilé 10 est en saillie par rapport à la région inférieure 7 elle-même en saillie par rapport à la région supérieure 8. Sur le bord opposé, la région supérieure 8 est en saillie par rapport à la région inférieure 7, la région inférieure 7 étant en saillie par rapport au premier profilé 10.

Le sous-ensemble 6 de plateforme 1 peut s'inscrire dans un rectangle plus petit que 1200x1100 mm, préférablement plus petit que 1100x1000 mm.

Sur site, le montage des trois sous-ensembles 6 est effectué en rapprochant les sous-ensembles 6 puis en les fixant avec les fixations. Le premier profilé du premier sous-ensemble est assemblé au deuxième profilé du sous-ensemble voisin par la patte 11 pliée vissée ou boulonnée. Le deuxième profilé du premier sous-ensemble est assemblé au premier profilé de l'autre sous-ensemble par une patte 11 pliée vissée ou boulonnée. Le deuxième profilé du premier sous-ensemble vient passer sous la région inférieure 7 de l'autre sous-ensemble tandis que la région inférieure 7 du premier sous-ensemble vient passer sous la région supérieure 8 dudit autre sous-ensemble. Le deuxième profilé du premier sous-ensemble est vissé à la région inférieure 7 de l'autre sous-ensemble. La région inférieure 7 du premier sous-ensemble est vissé à la région supérieure 8 dudit autre sous-ensemble.

Plusieurs techniques existent pour accrocher une installation ludique à un arbre. Une première technique a été d'entourer l'arbre avec un ou plusieurs tours de câbles ou de chaînes. Ceci a l'inconvénient de comprimer l'aubier lequel à la fonction vitale de circulation de la sève. Il en résulte des perturbations de la circulation de la sève dommageable pour l'arbre. Il peut également en résulter la formation de bourrelets autour des câbles ou des chaînes au fil des années de croissance de l'arbre.

Une deuxième technique consiste à installer une tige filetée dans un trou traversant l'arbre. Ceci a pour inconvénient d'affaiblir la structure mécanique de l'arbre.

Une troisième technique consiste à installer une vis dans un trou borgne ménagé dans l'arbre.

L'invention propose un mécanisme de support laissant l'arbre croître, conservant ses propriétés mécaniques et le maintenant dans des conditions sanitaires satisfaisantes.

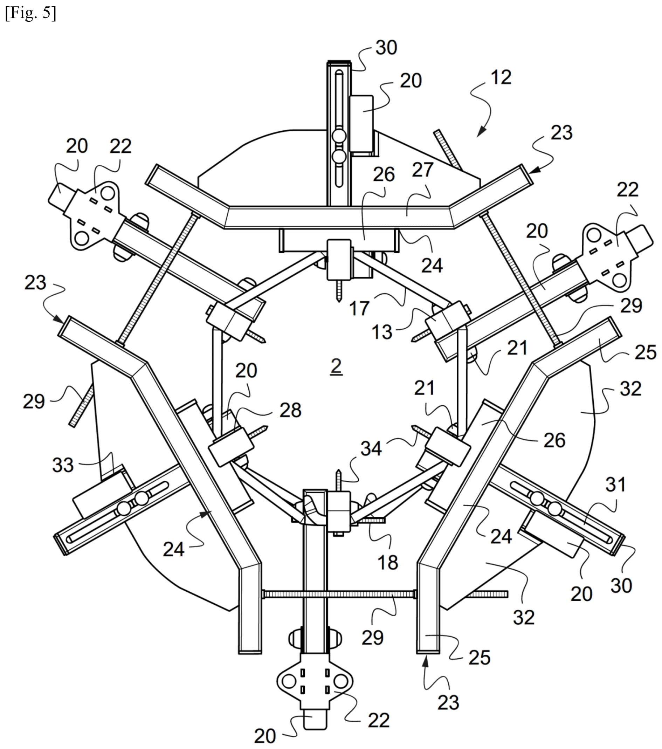

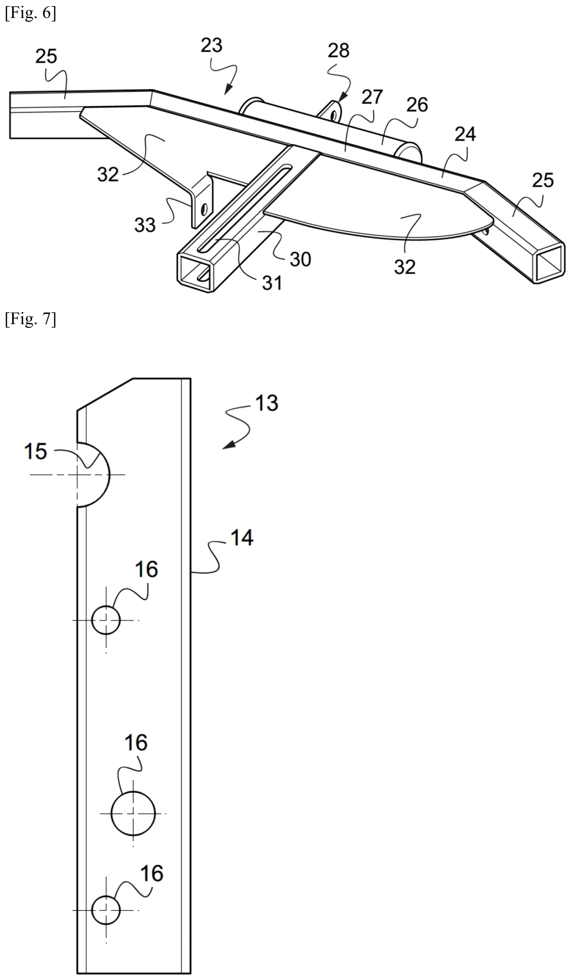

Une ceinture 12 de support pour plateforme 1 est représentée en figures 4 à 7.

La ceinture 12 comprend une pluralité de cales 13 présentant une surface d'appui 14 sur un arbre. Une partie des cales est pourvue d'une surface de pivot 15 opposée à ladite surface d'appui. Les cales 13 sont en bois. Les cales 13 présentent une forme générale de parallélépipède rectangle. Ladite surface d'appui 14 et une surface opposée parallèles sont reliées par des surfaces latérales. Ladite surface d'appui 14, la surface opposée parallèles et les surfaces latérales sont verticales à l'état monté autour d'un arbre. La surface d'appui 14 peut être réalisée en bois brut. Dans le mode de réalisation représenté, la surface de pivot est concave, notamment en encoche. En variante, la surface de pivot est convexe.

La surface de pivot 15 est ménagée à partir de la surface opposée. La surface de pivot 15 interfère avec les surfaces latérales. La surface de pivot 15 est en portion de cercle selon un axe transversal de la cale parallèle à une axe tangent à la lumière centrale 2 de la plateforme 1. Des perçages 16 sont ménagés à travers la cale 13 selon des axes parallèles à l'axe de la surface de pivot 15. La surface de pivot 15 est située dans une partie supérieure de la cale 13. Au moins deux desdits perçages 16 sont situés dans une partie inférieure de la cale 13. Un chanfrein est ménagé à l'extrémité supérieure de la cale 13 à l'opposé de la surface d'appui.

La ceinture 12 comprend au un moins une élingue 17 de serrage des cales autour dudit arbre. Le serrage prévu est léger. Le serrage prévu est réglable.

L'élingue 17 peut comprendre un câble métallique ou synthétique. Une première extrémité 171 de l'élingue 17 passe dans un desdits perçages 16 de la cale. La première extrémité 171 de l'élingue 17 est munie d'une fixation par interférence. La fixation par interférence peut comprendre une vis 35 traversant la cale et traversant l'élingue 17. L'élingue 17 est ainsi assujettie à la cale 13 à ladite première extrémité 171. Une deuxième extrémité de l'élingue 17 est munie d'une fixation réglable par vis. La deuxième extrémité de l'élingue 17 à la même cale 13, le cas échéant munie d'un nombre de trous adapté. A cet effet, la deuxième extrémité présente un embout 18 à filetage extérieur. L'embout peut être serti. L'embout 18 passe dans un desdits perçages de la cale. Un écrou 19 est vissé sur l'embout 18 du côté opposé à l'élingue 17. La fixation réglable permet une mise en tension progressive et finement ajustable.

Dans un mode de réalisation, deux élingues 17 sont prévues, l'une passant dans le perçage situé dans la partie inférieure de la cale et l'autre passant dans le perçage situé dans la partie supérieure de la cale 13.

Dans un mode de réalisation, l'une des cales 13 est prévue avec des perçages supplémentaires. Une paire de perçages est ménagée dans la partie inférieure de la cale et une autre paire de perçages est ménagée dans la partie supérieure de la cale. Les perçages d'une paire de perçages sont proches l'un de l'autre. L'un des perçages d'une paire de perçages reçoit la fixation par interférence et l'autre des perçages de la paire de perçages reçoit la fixation réglable par vis. Ainsi, la ceinture 12 est stable.

La ceinture 12 est préparée en atelier. Les élingues 17 sont passées par les perçages des cales 13. Les fixations par interférence sont mises en place en tenant compte du diamètre de l'arbre mesuré à l'avance.

A la pose de la ceinture 12 autour de l'arbre, les embouts 18 sont passés par ledit autre des perçages. Les écrous 19 sont présentés et vissés sur les embouts 18 assurant la mise en tension progressive de la ceinture 12. Le vissage peut être effectuée avec un limiteur de couple.

La ceinture 12 comprend une pluralité de jambes de force 20. Chaque jambe de force peut être réalisée en bois. Chaque jambe de force 20 se présente sous la forme d'une pièce parallélépipédique. Chaque jambe de force 20 peut être prévue avec un perçage inférieur. Chaque jambe de force 20 est supportée par une desdites cales 13 en partie inférieure de ladite cale et en pied de la jambe de force 20. Une liaison pivot 21 peut être montée entre la jambe de force 20 et la cale 13. La liaison pivot 21 peut être assurée par un boulon passant par l'un des deux perçages situés dans la partie inférieure de la cale 13 et passant par le perçage inférieur de la jambe de force 20. L'extrémité inférieure de la jambe de force 20 peut être arrondie pour limiter l'encombrement.

Chaque jambe de force 20 présente une extrémité supérieure sensiblement horizontale à l'état monté. Chaque jambe de force 20 est orientée par rapport à la cale correspondante d'un angle compris entre 30 et 60°, de préférence entre 40 et 50°, à l'état monté. Chaque jambe de force 20 s'étend vers le haut et vers l'extérieur à partir de la liaison avec la cale, soit en s'éloignant de la lumière centrale 2.

Dans le mode de réalisation représenté, une jambe de force 20 sur deux est reliée en extrémité supérieure à la plateforme 1 par une platine 22. La platine 22 présente deux plats inférieurs fixés sur deux côtés opposés de la jambe de force 20 et un plat supérieur fixé à la surface inférieure 4 de la plateforme 1. Le plat supérieur relie les deux plats inférieurs. Le plat supérieur forme un chapeau protégeant l'extrémité supérieure de la jambe de force 20 contre les infiltrations d'eau. Chaque plat est formé par un flanc de tôle. Les fixations de la platine 22 avec la jambe de force 20 et avec la plateforme 1 sont assurées par vissage ou boulonnage. Vue de face, la platine 22 présente une forme de lettre grecque Π.

Dans le mode de réalisation représenté, les autres jambes de force sont reliées à des bâtis décrits ci-dessous.

La ceinture 12 comprend les bâtis 23 reliés à une partie des jambes de force. Chaque bâti 23 est monté à pivotement dans une desdites surfaces de pivot des cales 13. Chaque bâti 23 comprend un fût 24 disposé dans ladite La surface de pivot 15. Chaque bâti 23 comprend deux branches 25 symétriques dirigées à l'opposé des cales 13. Les branches 25 sont orientées d'un angle de PI/2n radians par rapport au fût 24, avec n un entier. Dans le mode de réalisation représenté, chaque branche 25 est orientée à 30° par rapport au corps.

Dans le mode de réalisation représenté, les bâtis 23 présentent une forme en arc. L'arc peut être courbe ou en ligne brisée.

Le fût 24 du bâti 23 comprend, en outre, une portion de tube 26 monté pivotant dans ladite surface de pivot 15 et un corps 27 parallèle à la portion de tube 26. Le corps 27 supporte les branches 25 symétriques. La portion de tube 26 peut être circulaire comme représenté sur les figures ou occuper seulement un secteur angulaire inférieur à 360°. Le secteur angulaire est suffisant pour permettre un pivotement dans la surface de pivot 15. La portion de tube 26 est soudé au corps 27. La portion de tube 26 est disposée à partir du corps en direction de la lumière centrale 2. Dans le mode de réalisation représenté, la portion de tube 26 est convexe. La portion de tube 26 vient dans la surface de pivot 15 concave. En variante, la portion de tube 26 est concave et la surface de pivot 15 convexe vient en saillie dans la portion de tube 26.

Dans le mode de réalisation représenté, les branches 25 symétriques sont droites et le fût 24 est droit. Les branches 25 symétriques et le fût 24 peuvent être réalisés en profilés métalliques de section rectangulaire, notamment carrée. Chaque extrémité du fût 24 peut être soudée à une des branches 25 symétriques. En variante, les branches 25 symétriques et le fût 24 sont réalisés en tube métallique. Le bâti 23 est mécanosoudé.

En variante, le corps 27 est incurvé à l'opposé de la lumière centrale 2.

En variante, chaque branche 25 est incurvée à l'opposé de la lumière centrale 2.

Dans une autre variante, les branches 25 symétriques et le fût 24 sont réalisés en bois, notamment en bois abouté-collé. Dans cette variante, la portion de tube 26 peut être réalisée également en bois ou en métal avec fixation appropriée sur le corps en bois.

Un trou traversant est ménagé dans chaque branche 25 selon une direction circonférentielle par rapport à la lumière centrale 2.

De manière plus générale, le bâti 23 présente deux trous traversants formés à distance de la portion de tube 26, coplanaires et orientés avec un angle de PI/(1/2-1/n) l'un par rapport à l'autre, avec n le nombre de bâtis.

En outre, le bâti 23 comprend une patte 28 venant de la portion de tube 26. La patte 28 est dirigée vers l'intérieur, soit vers la lumière centrale 2. La patte 28 est prévue pour venir contre une des faces de la cale dans laquelle la portion de tube 26 est montée à pivotement. La patte 28 permet un positionnement rapide de la portion de tube 26 et du bâti 23 par rapport à la surface de pivot 15 et à la cale. Une fois les réglages de position effectuée, une vis peut fixer la patte 28 à la cale 13 pour une meilleure rigidité.

La ceinture 12 comprend un organe de serrage 29 entre une branche 25 d'un bâti 23 et une branche 25 voisine d'un bâti 23 voisin. Les deux branches 25 les plus proches de deux bâtis 23 voisins sont parallèles. Les trous traversant ménagés dans les branches 25 voisines sont ainsi alignés. Dans la variante à branches 25 incurvées, les trous traversant ménagés dans les branches 25 voisines sont également alignés. Dans le mode de réalisation représenté, il est prévu trois bâtis 23 et trois organes de serrage 29. Chaque organe de serrage 29 se présente sous la forme d'une tige filetée munie de deux écrous et, le cas échéant, de rondelles.

Chaque bâti 23 comprend également un bras 30 dirigé vers l'extérieur à partir du corps. Le bras 30 peut présenter une section proche de celle du corps. Le bras 30 peut être soudé au corps. Un trou oblong 31 d'axe parallèle à l'axe de la lumière centrale 2, en pratique vertical à l'état monté, est ménagé dans le bras 30. Chaque trou oblong 31 est muni d'au moins un boulon venant en prise avec la plateforme 1 par un trou traversant ladite plateforme 1. Une possibilité de réglage en position relative du bâti 23 par rapport à la plateforme 1 est ainsi créée. Dans le mode de réalisation représentée, deux boulons sont prévus dans chaque trou oblong 31.

Chaque bâti 23 comprend également deux ailes 32 disposées de part et d'autre du bras 30. Les ailes 32 sont globalement symétriques. Chaque aile 32 est constituée d'un flan de tôle. Chaque aile 32 est fixée au corps, au bras 30 et à la branche 25 adjacente, par exemple par soudure. Au voisinage du bras 30, et à distance du corps, une patte 33 est découpée à partir de l'une des ailes 32 puis pliée. La patte 33 est dirigée vers le bas. La patte 33 est fixée à une partie supérieure d'une jambe de force 20, par exemple par boulonnage.

Ainsi, les jambes de force qui viennent sensiblement au milieu d'un bâti 23 sont fixées au bâti 23 correspondant. Les jambes de force qui viennent sensiblement entre deux bâtis 23 sont munies de ladite platine et fixées directement à la plateforme 1.

Une fois que la ceinture 12 est mise en position autour d'un arbre, chaque cale 13 est fixée audit arbre au moyen de clous 34. Les clous sont préalablement désinfectés. Les clous présentent peu de risques pour l'arbre en termes sanitaires, de croissance ou encore de résistance mécanique.

Ainsi, on peut procéder par positionnement des cales 13 autour et contre un arbre, positionnement et serrage de l'élingue 17 appliquant les cales 13 contre l'arbre, montage des bâtis 23 dans les surfaces de pivot 15 des cales 13, montage des organes de serrage, montage des jambes de force, serrage des organes de serrage, fixation des cales 13 à l'arbre et montage des sous-ensembles 6 de plateforme 1 formant la plateforme 1.

Afin de former une cabane, le dispositif comprend en outre une pluralité de parois périphériques 40. Les parois périphériques 40 sont fixées à la plateforme 1 à distance d'un axe de symétrie de la lumière centrale 2, en particulier sur les ou au voisinage des bords extérieurs de la plateforme 1. Chaque paroi périphériques 40 comprend une partie inférieure 41 munie d'au moins un poteau, par exemple deux poteaux. Chaque paroi périphérique 40 comprend une partie supérieure 42 formant un angle d'au moins 90° par rapport à la partie inférieure 41.

La partie inférieure 41 de la paroi périphérique s'éloigne dudit axe en se rapprochant de la partie supérieure 42. La partie inférieure 41 forme un évasement. La partie inférieure 41 comprend deux poteaux parallèles et un panneau voisin de la partie supérieure. La partie supérieure 42 forme un toit pour le dispositif. Ledit angle est compris entre 100 et 150°. Préférablement, la partie supérieure 42 est un panneau plein offrant ainsi une certaine protection contre les intempéries.

Des entretoises 43 sont prévues. Chaque entretoise 43 est montée entre deux parois périphériques 40. Chaque entretoise 43 peut être fixée à la partie supérieure 42 d'une partie périphérique 40, notamment au voisinage de l'extrémité supérieure. Chaque entretoise 43 se présente sous la forme d'un flanc de tôle. Chaque entretoise 43 comprend une partie centrale plane et deux pattes d'extrémité formées par pliage. Une lumière est formée au milieu de la partie centrale. Une patte dirigée radialement vers l'intérieur est fixée à ladite partie centrale. Une contrefiche 44 s'étend entre chaque patte 43 et une ceinture supérieure non représentée. La ceinture supérieure peut être identique à la ceinture de support 12. La contrefiche 44 peut être réalisée en bois. La contrefiche 44 est fixée à la patte correspondante. La contrefiche 44 est orientée radialement. La ceinture supérieure est fixée à une extrémité intérieure de la contrefiche.

La partie inférieure des poteaux repose sur la plateforme 1. Des sabots 45 métalliques peuvent être prévus formant interface entre les poteaux et la plateforme. Le sabot 45 comprend une partie inférieure plane par exemple un flanc de tôle muni de perçages pour la fixation à la plateforme. Le sabot 45 comprend une partie supérieure, notamment à section en U. La partie supérieure est fixée à la partie inférieure par soudage. La partie supérieure vient entourer le poteau correspondant. La partie supérieure est munie de perçages et fixée au poteau, notamment par boulonnage.

Les parois périphériques 40 peuvent être préparées en atelier ou en usine. La ceinture supérieure est installée autour de l'arbre. Chaque paroi périphérique 40 est disposée à proximité d'un côté de la plateforme 1. Chaque paroi périphérique 40 est à distance d'un axe de symétrie de la lumière centrale 2. Les parties supérieures 42 des parois périphériques 40 sont reliées par les entretoises 43. La ceinture supérieure est fixée aux contrefiches. Ainsi, une fixation d'une extrémité supérieure des parois périphériques 40 à la ceinture supérieure est obtenue. On peut ensuite procéder à un serrage final des fixations concernées par le montage en extérieur.

## Revendications

1. Plateforme (1) supportée par un arbre, comprenant une lumière centrale (2) et une surface supérieure (5) plane en bois formant plancher pour un utilisateur se déplaçant dessus autour de la lumière centrale (2), **caractérisée en ce qu'**elle comprend trois sous-ensembles (6) identiques et complémentaires, chacune comprenant une région inférieure (7) occupant un premier secteur angulaire d'environ 120° autour de la lumière centrale (2) et une région supérieure (8) occupant un deuxième secteur angulaire, le deuxième secteur angulaire étant décalé par rapport au premier secteur angulaire, et chacune comprenant un premier bord et un deuxième bord opposés et complémentaires de manière que le premier bord d'un desdits sous-ensembles (6) et le deuxième bord d'un sous-ensemble voisin soient en complémentarité de formes.

2. Plateforme 1 selon la revendication 1, dans lequel la région inférieure (7) et la région supérieure (8) sont réalisées en bois.

3. Plateforme 1 selon la revendication 1 ou 2, dans lequel le premier bord est en forme de ligne brisée.

4. Plateforme 1 selon l'une des revendications précédentes, comprenant une longrine (9) périphérique.

5. Dispositif comprenant une plateforme 1 selon l'une des revendications précédentes et une ceinture (12) de support, la ceinture (12) comprenant une pluralité de cales (13) en bois présentant une surface d'appui sur un arbre et une surface de pivot (15) opposée à ladite surface d'appui, au moins une élingue (17) de serrage des cales (13) autour dudit arbre, une pluralité de bâtis (23) montés à pivotement chacun dans une desdites surfaces de pivot (15), chaque bâti (23) comprenant un fût (24) disposé dans ladite surface de pivot (15), et deux branches (25) symétriques dirigées à l'opposé des cales (13) et orientées d'un angle de PI/2n radians par rapport au fût (24) et un organe de serrage entre une branche (25) d'un bâti (23) et une branche (25) parallèle d'un bâti (23) voisin, avec n un entier.

6. Dispositif selon la revendication 5, dans lequel chaque cale (13) présente une forme générale de parallélépipède rectangle avec ladite surface d'appui et une surface opposée parallèles reliées par des surfaces latérales, ladite surface de pivot (15) étant ménagée à partir de la surface opposée et interférant avec les surfaces latérales.

7. Dispositif selon la revendication 5 ou 6, comprenant au moins une jambe de force (20) supportée par une desdites cales (13) en partie inférieure de ladite cale par une liaison pivot tandis que ladite surface de pivot (15) est prévue dans une partie supérieure de ladite cale, ladite jambe de force (20) supportant la plateforme (1) ou le bâti (23) à distance de la lumière centrale (2).

8. Dispositif selon l'une des revendications 5 à 7, dans lequel l'élingue (17) comprend une première extrémité fixée à une desdites cales (13) par interférence et une deuxième extrémité fixée à ladite cale avec mise en tension par vis.

9. Dispositif selon l'une des revendications 5 à 8, dans lequel le fût (24) du bâti (23) comprend une portion de tube (26) monté pivotant dans ladite surface de pivot (15) et un corps (27) parallèle à la portion de tube (26) et supportant les branches (25) symétriques, un trou traversant chaque branche (25) pour loger un desdits organes de serrage, le bâti (23) étant mécanosoudé, le corps étant droit ou incurvé et chaque branche (25) étant droite ou incurvé à l'opposé de la lumière centrale (2).

10. Dispositif selon l'une des revendications 5 à 9, comprenant une pluralité de parois périphériques (40) fixées à la plateforme (1) à distance d'un axe de symétrie de la lumière centrale (2), chacune comprenant une partie inférieure (41) munie d'au moins un poteau et une partie supérieure (42) formant un angle d'au moins 90° par rapport à la partie inférieure (41) et présentant une extrémité supérieure fixées mutuellement.

11. Dispositif selon la revendication 10, dans lequel la partie inférieure (41) s'éloigne dudit axe en se rapprochant de la partie supérieure (42) pour former un évasement, la partie inférieure (41) comprenant deux poteaux parallèles et un panneau voisin de la partie supérieure (42), et la partie supérieure (42) forme un toit pour le dispositif, ledit angle étant compris entre 100 et 150°, la partie supérieure (42) étant un panneau plein.

12. Procédé de montage d'un dispositif selon l'une des revendications 5 à 11, comprenant les étapes de :
a) fabriquer des sous-ensembles (6) de plateforme,
b) disposer les sous-ensembles (6) de plateforme autour d'un arbre, et
c) fixer ensemble les sous-ensembles (6) de plateforme pour former une plateforme (1).

13. Procédé de montage selon la revendication 12, d'un dispositif selon l'une des revendications 5 à 11, comprenant les étapes de :
d) Positionnement des cales (13) autour et contre un arbre,
e) Positionnement et serrage de l'élingue (17) appliquant les cales (13) contre l'arbre,
f) Positionnement-des bâtis (23) en contact avec les surfaces de pivot des cales (13),
g) Montage des organes de serrage (29),
h) Montage de jambes de force (20),
i) Serrage des organes de serrage (29),
j) Fixation des cales (13) à l'arbre, puis procéder aux étapes b) et c) en posant les sous-ensembles (6) de plateforme sur les bâtis (23).

14. Procédé selon la revendication 13, comprenant les étapes de :
k) Installation d'une ceinture supérieure autour de l'arbre,
1) Montage d'une pluralité de parois périphériques (40) fixées à la plateforme (1) à distance d'un axe de symétrie de la lumière centrale (2),
m) Fixation d'une extrémité supérieure des parois périphériques (40) à la ceinture supérieure.
